Europäisches Patentamt

European Patent Office

Office européen des brevets

(19)

(11) **EP 1 121 685 B1**

(12) **EUROPEAN PATENT SPECIFICATION**

(45) Date of publication and mention
of the grant of the patent:
**28.05.2003  Bulletin 2003/22**

(51) Int Cl.⁷: **G10L 15/20**, G10L 21/02

(21) Application number: **99952678.3**

(86) International application number:
**PCT/GB99/03322**

(22) Date of filing: **15.10.1999**

(87) International publication number:
**WO 00/023984 (27.04.2000 Gazette 2000/17)**

(54) **SPEECH PROCESSING**

SPRACHVERARBEITUNG

TRAITEMENT DE LA PAROLE

(84) Designated Contracting States:
**AT BE CH CY DE DK ES FI FR GB GR IE IT LI LU
MC NL PT SE**

(30) Priority: **16.10.1998  GB 9822529**

(43) Date of publication of application:
**08.08.2001  Bulletin 2001/32**

(73) Proprietor: **Dragon Systems UK Research &
Development Limited
Cheltenham, Gloucestershire GL52 4RW (GB)**

(72) Inventor: **HUNT, Melvyn, John
Cheltenham,Gloucestershire GL52 4UF (GB)**

(74) Representative: **Newell, William Joseph
Wynne-Jones, Lainé & James
22 Rodney Road
Cheltenham Gloucestershire GL50 1JJ (GB)**

(56) References cited:
**EP-A- 0 093 303        EP-A- 0 248 609
DE-A- 19 751 536        US-A- 4 696 041
US-A- 5 361 324**

• **PATENT ABSTRACTS OF JAPAN vol. 017, no.
197 (P-1523), 16 April 1993 (1993-04-16) & JP 04
343399 A (RICOH CO LTD), 30 November 1992
(1992-11-30)**
• **PATENT ABSTRACTS OF JAPAN vol. 017, no.
673 (P-1658), 10 December 1993 (1993-12-10) &
JP 05 224694 A (RICOH CO LTD), 3 September
1993 (1993-09-03)**
• **PATENT ABSTRACTS OF JAPAN vol. 018, no.
244 (P-1734), 10 May 1994 (1994-05-10) & JP 06
027991 A (TOSHIBA CORP;OTHERS: 01), 4
February 1994 (1994-02-04)**

**Description**

This invention relates to apparatus and a method for estimating the speech level of a speaker exposed to an environment containing a variable amount of acoustic noise.

In particular, but not exclusively, the invention relates to such apparatus and methods for use in speech recognition.

The central process in automatic speech recognition is the comparison between some representation of the speech to be recognised and a set of reference models corresponding to speech sounds or words or other units. It is important that the level of the speech signal represented in the recogniser should be close to that expected by the models.

Because speech sounds vary in their intrinsic loudness, measuring overall speech level is not a trivial process. It is necessary either to take a large enough sample of the speech that the variations occurring between speech sounds average out, or to compare an utterance whose level is to be measured with an utterance at some known level whose phonetic content is the same. In this second method, phonetically identical speech sounds can be compared, but it does require a knowledge of the content of the utterance to be measured.

US-A-4696041 discloses an apparatus for detecting an utterance boundary against a varying level of background noise.

EP-A-093303 discloses a speech recognition apparatus in which the gain of the signal is adjusted inversely to the background noise level.

We have realised that it is in fact possible to estimate variations in the likely level of the speech signal in acoustically noisy environments by measuring the ambient noise level and using a phenomenon known as the Lombard Effect to determine the likely speech levels. The Lombard Effect is the phenomenon that when people are exposed to noise their speech changes and becomes generally becomes louder. If no adjustment is made for the Lombard Effect in an automatic speech recognition system there will be a mismatch between the level of the speech to be recognised and the expected level. In principle, this could be corrected by observing the speech level and adjusting the gain of an amplifier in the recogniser to compensate for the variation in level. However, in some circumstances this is not a practical arrangement. For example, in a car the noise level can change from one utterance to another following changes in the speed of the car or in the road surface, or because a window is wound down. A gain setting based on the previous utterance will then be inappropriate. In some circumstances, it might be possible to wait until the utterance was complete, measure the speaking level, adjust the recorded utterance to normalise this level, and only then submit it to the recogniser. However, this process would introduce a delay in the response of the recogniser, which for many applications would be unacceptable.

In one aspect, this invention provides for predicting the speech level in an.utterance of a speaker exposed to an environment containing a variable level of ambient acoustic noise, the apparatus comprising

means (18) for measuring said ambient acoustic noise level (N),

means (18) for measuring the speech level (S) of a previous utterance, and

processing means (22) for using said measured acoustic noise level and the speech level of said previous utterance to provide an output signal representative of and estimate of the likely speech level (S*) in said utterance.

In this apparatus, as the noise level in the environment in which the speaker is located changes between utterances, so his speech level is likely to rise and fall in accordance with the Lombard Effect, and the apparatus predicts the likely speech level. We have found that the likely speech level can be predicted with reasonable accuracy by measuring the noise immediately adjacent to an utterance; measuring the level of a steady noise is quite simple and can be carried out with just a short sample of the noise. The apparatus preferably also uses a measure of the speech level and the corresponding noise level relating to a previous or standardised utterance.

The ambient acoustic noise level could be measured before, after or even during utterance of a word or phrase, and it is preferred for the measurement to be made close in time to the utterance to reduce the possibility of the prediction of the likely speech level being inaccurate due to a significant shift in noise level between measurement and the actual utterance.

It is preferred for the measuring means to measure the ambient acoustic noise level immediately before the utterance, the estimate of speech level being determined before or as the utterance is made rather than thereafter. Alternatively the measurement may be after the utterance.

The apparatus preferably includes means operable to define, for each utterance, an utterance period comprising a first time period for measuring said acoustic noise level and a second time period during which said utterance is made.

Thus in a preferred embodiment, the apparatus includes a user input device (such as e.g. a switch) and a timer and control means for defining said first noise measuring period, and said second speech measuring and/or recording period, the end of said first period being indicated to said user.

In a particularly preferred aspect, said apparatus is responsive to a succession of one or more utterances by a speaker and said measuring means measures the ambient noise level prevailing at each of said utterances to provide a series of noise measurements and said apparatus includes means for measuring the speech level of an utterance, and said processing means uses at least two of said noise measurements, together with the measurement of the speech level of the immediately previous utterance, to provide an output of signal representative of the likely speech level of the next utterance.

In one example, where the noise is measured immediately before an utterance, the processing apparatus means predicts the speech level $S_1{}^*$ of an utterance (1) on the basis of the following expression:

$$S_1{}^* = S_o + f(N_1 - N_o)$$

where $S_o$ is the speech level of the immediately previous utterance; $N_1, N_o$ are the noise levels prevailing immediately before the utterance whose speech level is to be estimated, and immediately before the next previous utterance respectively, and $f(x)$ is a function relating changes in the noise level in which the speaker is situated to the speaker's speech level.

The function is preferably monotonic increasing, and in a simple case is a multiplying factor less than 1. The multiplying factor may typically be a positive value in the range of from 0 to 0.6, and in one example is 0.32.

Alternatively the function may be a more complex function of the noise level difference. Likewise, the function may be modified to take account of more than just two noise level measurements; thus information relating to the speech levels of several previous utterances, together with the associated noise levels may be aggregated to predict the speech level of the next utterance.

In another aspect, this invention provides speech recognition or processing apparatus including predicting apparatus as set out above for use in adjusting the gain of the speech signal prior to recognition processing.

In yet another aspect, this invention provides a method for predicting the speech level of a speaker exposed to an environment containing a variable level of ambient acoustic noise, said method comprising the steps of:-

measuring said ambient acoustic noise level, and processing said measured acoustic noise level with a measurement of the speech level of a previous utterance to produce a prediction of the likely speech level.

In a further aspect, this invention provides a method for controlling the gain in a speech recognition or processing system, which comprises controlling the gain of the speech signal in accordance with a prediction of the speech level obtained by the above method.

The invention may be performed in various ways, and an embodiment thereof will now be described by way of example only, reference being made to the accompanying drawing in which:-

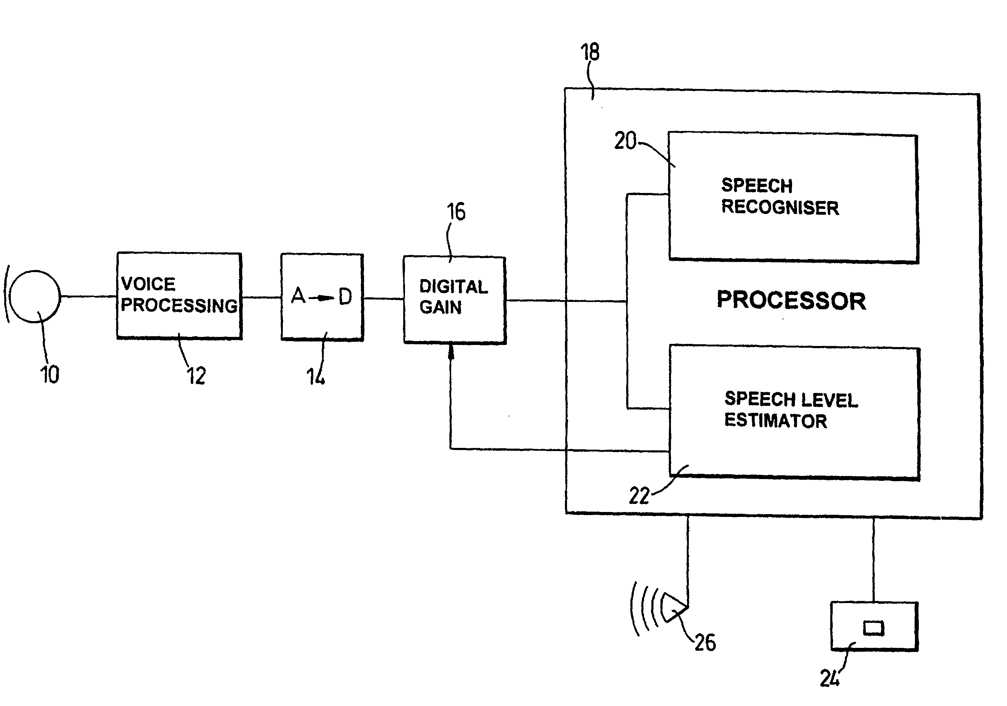

Figure 1 is a block diagram of a speech recogniser incorporating speech level prediction in accordance with the invention.

The illustrated embodiment implements a system which applies knowledge of variation in the ambient acoustic noise level and its likely effect on the speech level to predict the speech level in the next utterance to be recognised by a speech recogniser. It is assumed that the variation in noise level over the duration of a single utterance is small compared with the variations occurring between utterances, and also that the noise has sufficient short-term stationarity that its level can be measured from a brief sample.

Referring to Figure 1, the speech recognition system comprises a microphone 10 whose output is subjected to voice processing at 12 before analogue to digital conversion at 14. The digital signal passes via a digital gain device 16 to a processor 18 which incorporates a recogniser 20 and a speech level estimator 22. The speech recogniser may be of any suitable type and examples of suitable recognisers will be well known to those skilled in the art. The processor 18 also receives an input from a switch 24 acting as a user input device, and can issue warning tones to the user through a sounder 26.

The system illustrated is intended for use in a noisy environment whose noise level varies. In use, the user alerts the system when he wants to make an utterance to be recognised, by closing the switch 24. The processor then defines an utterance frame, comprising a first short time period, during which the ambient noise is sampled, followed by issuing a tone on the sounder 26, which indicates to the user that he may speak, followed by a second period during which the speech signal is sampled and sent to the recogniser 20. The second period is longer than the first period and sufficiently long to contain the longest utterance to be recognised. There are a number of ways of delimiting the second period other than providing a period of set duration. For example the length of the period may be user designated, e.g. by the user keeping the button pressed or pressing the button again. Alternatively, the processor may listen for a period of silence, or it may infer the end of a command based on an analysis of the grammar of the utterance. In addition, instead of using a switch, the start of the utterance frame may be marked by the user uttering a codeword.

Since it is known that speech levels vary with noise level, it is possible to predict a change in the speech level in an utterance from a change in the noise level. The speech and noise levels, $S_o$ and $N_o$, (in dB units) are measured by the processor in one noise condition. The new noise level, $N_1$, in the first period of the next utterance, just before the start of an utterance to be recognised, is also measured by the processor. The difference in the two noise levels, $N_1-N_o$, is then determined and used by the processor, together with knowledge of the speech level, $S_0$ of the previous utterance, to predict the speech level, $S_1$, of the new utterance. We can write $S^*_1$ $S_o$ + $f(N_1-N_o)$, where $S^*_1$ is a prediction estimate of $S_1$ and $f(x)$ is the function relating changes in the noise level in the speaker's ears to the speaker's speech level. In the simplest arrangement, the function is a multiplying factor less than 1, but it can also be a more complex function of the noise level difference. In practice we have determined empirically that the speech level good results are achieved in one application by using a multiplying factor of typically 0.3 although positive values between 0 and 0.6 should all provide some improvement. It may be assumed to be the same for all speakers or may be estimated separately for each speaker.

Since the measurements of the reference speech and noise levels, $S_o$ and $N_o$, respectively, are subject to measurement errors, it may be preferred to aggregate the information contributing to the prediction of $S_1$ from several previous utterances and noise estimates. The computation of $S^*_1$ described in the previous paragraph can be replaced by an average over several previous utterances. This may be a simple average or it may be a weighted average, the weights possibly depending on factors such as the time difference between the various reference utterances and $S_1$ and on the relative durations of the various reference utterances. For example the computation may take account of any time effects. For example it may be found that, when exposed to a particular level of ambient noise that the speaker's speech level rises over an initial period and then decreases, in a temporal filtering effect.

Having determined an estimate of the speech level of the new utterance, the processor controls the gain of the signal accordingly. The gain may be adjusted at various points; it may be adjusted whilst the signal is still in the analogue domain or it may be achieved by digital scaling as shown by the digital gain device 16. A further alternative is to manipulate the fast fourier transform (FFT) values in the speech recogniser. If a cepstrum is computed, the signal may be scaled by adding an appropriate constant to the $C_o$ coefficient. In a further arrangement, the system may compensate for increases or decreases in the speech level by adjusting the effective speech levels that the models in the recogniser represent.

The gain may take into account factors other than simply the level of the background noise; for example it could also take account of its spectral structure.

The output of the recogniser may be used in any convenient form. For example it could be used to enable a person to issue spoken commands to equipment.

## Claims

1. Apparatus for predicting the speech level in an utterance of a speaker exposed to an environment containing a variable level of ambient acoustic noise, the apparatus comprising

    means (18) for measuring said ambient acoustic noise level (N),

    means (18) for measuring the speech level (S) of a previous utterance, and

    processing means (22) for using said measured acoustic noise level and the speech level of said previous utterance to provide an output signal representative of and estimate of the likely speech level (S*) in said utterance.

2. Apparatus according to Claim 1, wherein said measuring means (18) measures the ambient acoustic noise level (N) immediately adjacent to said utterance.

3. Apparatus according to Claim 2, including means (24) for activating said measuring means (18) before the utterance.

4. Apparatus according to any preceding Claim which includes means (22) operable to define, for each utterance, an utterance period comprising a first time period for measuring said acoustic noise level (N) and a second time period during which said utterance is made.

5. Apparatus according to Claim 4, which includes a user input device (24), a timer, control means for defining said first period, and said second period, and means (26) for indicating to a user the end of said first period.

6. Apparatus according to Claim 5, responsive to a succession of one or more utterances by a speaker, and wherein said measuring means (18) is operable to measure the ambient noise level ($N_n$) prevailing at each of said utterances to provide a series of noise values, and said apparatus includes means (18) for measuring the speech level ($S_n$) of an utterance, and said processing means (22) uses at least two of said noise values (Nn), together with a value representative of the speech level ($S_n$) of the immediately previous utterance, to provide an output signal representative of the likely speech level ($S_n$*) of the next utterance.

7. Apparatus according to Claim 6, wherein said measuring means (18) is adapted to measure the ambient acoustic noise level before an utterance (Nn), and the processing means provides an output signal representative of an estimate of the speech level $S_1$* of an utterance (1) on the basis of the fol-

lowing expression:

$$S_1{}^* = S_o + f(N_1 - N_o)$$

where

$S_o$ is the speech level of the immediately previous utterance;
$N_1$, $N_o$ are the noise levels prevailing immediately before the utterance whose speech level is to be estimated, and immediately before the next previous utterance respectively, and
$f(x)$ is a function relating changes in the noise level in which the speaker is situated to the speaker's speech level.

8. Apparatus according to Claim 7, wherein said processing means (22) provides an output signal representative of an estimate of the speech level $S_i{}^*$ on the basis of the following expression:

$$S_1{}^* = S_o + k(N_1 - N_o)$$

where k is a constant, k<1.

9. Apparatus according to Claim 8, wherein k lies in the range of from 0 to 0.6.

10. A speech recognition system for receiving a speech utterance in use in an environment containing ambient acoustic noise, said system including speech recogniser means (20) for receiving and processing data representative of said speech utterance to be recognised to output data representative of or dependent on the lexical content of said speech utterance, said system including level adjusting means (16) for adjusting the level (s) of the speech utterance, said system further including means (18) for measuring said ambient acoustic noise level (N),
    means (18) for measuring the speech level(s) of a previous utterance, and
    processing means (22) for using said measured acoustic noise level and the speech level of said previous utterance to provide an output signal representative of and estimate of the likely speech level(s*) in said utterance, and
    means for controlling said level adjusting means (16) in accordance with said output signal representation of the likely speech level ($S_n{}^*$) of the speech utterance.

11. A method for predicting the speech level (S) of an utterance of a speaker exposed to an environment containing a variable level of ambient acoustic noise (N), said method comprising the steps of:-
    measuring said ambient acoustic noise level (N), and
    processing said measured acoustic noise level (N) with a measurement of the speech level (S) of a previous utterance to predict the likely speech level (S*) of said utterance.

12. A method according to Claim 11, wherein said ambient acoustic noise level ($N_n$) is measured before said utterance.

13. A method according to Claim 11, wherein a plurality of measurements of said acoustic noise level (N) are taken and used with one or measurements of the speech levels (S) corresponding to said measurements of acoustic noise level to predict the likely speech level (S) of the utterance.

14. A method for controlling the gain in a speech recognition or processing system in an environment containing a variable level of ambient acoustic noise, which method comprises controlling the gain of the speech signal in accordance with an estimate of the speech level (S*), said estimate being obtained by measuring said ambient acoustic noise level (N), and processing said measured acoustic noise level (N) with a measurement of the speech level (S) of a previous utterance to produce an estimate of the likely speech level of said utterance.

**Patentansprüche**

1. Vorrichtung zum Vorhersagen des Sprachpegels in einer Sprachäußerung eines Sprechers, welcher einer Umgebung mit akustischen Umgebungsgeräuschen mit variablem Pegel ausgesetzt ist, wobei die Vorrichtung folgendes umfaßt:

    Mittel (18) zum Messen des akustischen Umgebungsgeräuschpegels (N);
    Mittel (18) zum Messen des Sprachpegels (S) einer vorherigen Sprachäußerung und
    Verarbeitungsmittel (22), welches den gemessenen akustischen Umgebungsgeräuschpegel und Sprachpegel der vorherigen Sprachäußerung verwendet, um ein Ausgangssignal zu Verfügung zu stellen, welches den wahrscheinlichen Sprachpegel (S*) der Sprachäußerung repräsentiert und abschätzt.

2. Vorrichtung nach Anspruch 1, **dadurch gekennzeichnet, daß** das Meßmittel (18) den akustischen Umgebungsgeräuschpegel (N) unmittelbar neben der Sprachäußerung mißt.

3. Vorrichtung nach Anspruch 2, **dadurch gekennzeichnet, daß** ein Mittel (24) zum Aktivieren des Meßmittels (18) vor der Sprachäußerung vorgesehen ist.

**4.** Vorrichtung nach einem der vorhergehenden Ansprüche, **dadurch gekennzeichnet, daß** ein Mittel (22) vorgesehen und derart ausgebildet ist, daß dieses für jede Sprachäußerung einen Sprachäußerungs-Zeitabschnitt definiert, welcher einen ersten Zeitabschnitt zum Messen des akustischen Geräuschpegels (N) und einen zweiten Zeitabschnitt, während dem die Sprachäußerung erfolgt, aufweist.

**5.** Vorrichtung nach Anspruch 4, **dadurch gekennzeichnet, daß** eine Benutzereingabevorrichtung (24), ein Taktgeber, Steuermittel zum Definieren des ersten Zeitabschnittes und des zweiten Zeitschnittes sowie Mittel (26), um dem Benutzer das Ende des ersten Zeitabschnittes anzuzeigen, vorgesehen sind.

**6.** Vorrichtung nach Anspruch 5, welche auf aufeinander folgende Sprachäußerungen eines Sprechers anspricht, wobei das Meßmittel (18) derart ausgebildet ist, daß dieses den bei jeder Sprachäußerung vorherrschenden Umgebungsgeräuschpegel ($N_n$) mißt, um eine Serie von Geräuschwerten zur Verfügung zu stellen, wobei die Vorrichtung Mittel (18) umfaßt, um den Sprachpegel (Sn) einer Sprachäußerung zu messen, und wobei das Verarbeitungsmittel (22) wenigstens zwei der Geräuschwerte ($N_n$) zusammen mit einem Wert für den Sprachpegel ($S_n$) der unmittelbar vorherigen Sprachäußerung verwendet, um ein Ausgangssignal zur Verfügung zu stellen, welches den wahrscheinlichen Sprachpegel ($S_n$*) der nächsten Sprachäußerung repräsentiert.

**7.** Vorrichtung nach Anspruch 6, **dadurch gekennzeichnet, daß** das Meßmittel (18) derart ausgebildet ist, daß dieses den akustischen Umgebungsgeräuschpegel vor einer Sprachäußerung ($N_n$) mißt, und daß das Verarbeitungsmittel ein Ausgangssignal zur Verfügung stellt, welches eine Abschätzung des Sprachpegels $S_1$* einer Sprachäußerung (1) auf der Basis des folgenden Ausdruckes zur Verfügung stellt:

$$S_1{}^* = S_0 + f(N_1\text{-}N_0),$$

wobei

$S_0$ der Sprachpegel der unmittelbar vorhergehenden Sprachäußerung ist,
$N_1$, $N_0$ die Geräuschpegel sind, welche jeweils unmittelbar vor der Sprachäußerung, deren Sprachpegel abgeschätzt werden soll, und unmittelbar vor der nächst vorangegangenen Sprachäußerung vorherrschten, und
f(x) eine Funktion ist, welche Änderungen im Geräuschpegel, denen der Sprecher ausgesetzt ist, zu Sprachpegeln des Sprechers in Beziehung setzt.

**8.** Vorrichtung nach Anspruch 7, **dadurch gekennzeichnet, daß** das Verarbeitungsmittel (22) ein Ausgangssignal zur Verfügung stellt, welches einer Abschätzung des Sprachpegels $S_1$* auf der Basis des folgenden Ausdrucks entspricht:

$$S_1{}^* = S_0 + k(N_1\text{-}N_0),$$

wobei k eine Konstante mit k < 1 ist.

**9.** Vorrichtung nach Anspruch 8, **dadurch gekennzeichnet, daß** k einen Wert im Bereich von 0 bis 0,6 aufweist.

**10.** Spracherkennungssystem zum Empfang einer Sprachäußerung zur Benutzung in einer Umgebung mit akustischen Umgebungsgeräuschen, wobei das System Spracherkennungsmittel (20) zum Empfang von Daten, welche die zu erkennende Sprachäußerung repräsentieren, und zum Verarbeiten dieser Daten zu Ausgangsdaten umfaßt, welche den lexikalischen Inhalt der Sprachäußerung repräsentieren oder von diesem abhängig sind, wobei das System ein Pegeleinstellmittel (16) zum Einstellen des Pegels (s) der Sprachäußerung umfaßt, und daß das System femer folgendes aufweist:

Mittel (18) zum Messen des akustischen Umgebungsgeräuschpegels (N),
Mittel (18) zum Messen des Sprachpegels (s) einer vorherigen Sprachäußerung und
Verarbeitungsmittel (22), welches den gemessenen akustischen Umgebungsgeräuschpegel und Sprachpegel der vorherigen Sprachäußerung verwendet, um ein Ausgangssignal zu Verfügung zu stellen, welches den wahrscheinlichen Sprachpegel (s*) der Sprachäußerung repräsentiert und abschätzt, und
Mittel zum Steuern des Pegeleinstellmittels (16) gemäß dem Ausgangssignal, welches den wahrscheinlichen Sprachpegel ($S_n$*) der Sprachäußerung repräsentiert.

**11.** Verfahren zum Vorhersagen des Sprachpegels (S) einer Sprachäußerung eines Sprechers, welcher einer Umgebung mit akustischen Umgebungsgeräuschen (N) mit variablem Pegel ausgesetzt ist, wobei das Verfahren folgende Schritte umfaßt:

Messen des akustischen Umgebungsgeräuschpegels (N) und

Verarbeiten des gemessenen akustischen Umgebungsgeräuschpegels (N) mit einer Messung des Sprachpegels (S) einer vorherigen Sprachäußerung, um den wahrscheinlichen Sprachpegel (S\*) dieser Sprachäußerung vorherzusagen.

12. Verfahren nach Anspruch 11, **dadurch gekennzeichnet, daß** der akustische Umgebungsgeräuschpegel ($N_n$) vor der Sprachäußerung gemessen wird.

13. Verfahren nach Anspruch 11, **dadurch gekennzeichnet, daß** mehrere Messungen des Umgebungsgeräuschpegel ($N_n$) vorgenommen und zusammen mit einer oder mehreren Messungen der Sprachpegel (S), welche den Messungen des akustischen Geräuschpegels entsprechen, verwendet werden, um den wahrscheinlichen Sprachpegel (S) der Sprachäußerung vorherzusagen.

14. Verfahren zum Steuern der Verstärkung in einem Spracherkennungs- oder -verarbeitungssystem in einer Umgebung mit akustischen Umgebungsgeräuschen mit variablem Pegel, wobei das Verfahren das Steuern der Verstärkung des Sprachsignals gemäß einer Abschätzung des Sprachpegels (S\*) umfaßt, wobei die Abschätzung durch Messen des Umgebungsgeräuschpegels (N) und Verarbeiten des gemessenen Umgebungsgeräuschpegels (N) mit einer Messung des Sprachpegels (S) einer vorherigen Sprachäußerung zum Erzeugen einer Abschätzung des wahrscheinlichen Sprachpegels der Sprachäußerung erhalten wird.

**Revendications**

1. Appareil pour prédire le niveau vocal des paroles prononcées par une personne exposée à un environnement contenant un niveau variable de bruit acoustique ambiant, l'appareil comprenant :

   - un moyen (18) pour mesurer ledit niveau de bruit acoustique ambiant (N) ;
   - un moyen (18) pour mesurer le niveau vocal (S) de paroles prononcées précédemment ; et
   - un moyen de traitement (22) pour utiliser ledit niveau vocal acoustique mesuré et le niveau vocal desdites paroles prononcées précédemment pour fournir un signal de sortie représentatif du et estimatif du niveau vocal probable (S\*) de ladite prononciation.

2. Appareil selon la revendication 1, dans lequel ledit moyen de mesure (18) mesure le niveau de bruit acoustique ambiant (N) immédiatement voisin de ladite prononciation.

3. Appareil selon la revendication 2, comprenant un moyen (24) pour activer ledit moyen de mesure (18) avant ladite prononciation.

4. Appareil selon l'une quelconque des revendications précédentes qui comprend un moyen (22) actionnable pour définir, pour chaque prononciation, une période de prononciation comprenant une première période de temps pour mesurer ledit niveau de bruit acoustique (N) et une seconde période de temps pendant laquelle ladite prononciation est faite.

5. Appareil selon la revendication 4, qui comprend un dispositif d'entrée utilisateur (24), un registre d'horloge, un moyen de commande pour définir ladite première période et ladite seconde période, et un moyen (26) pour indiquer à un utilisateur la fin de ladite première période.

6. Appareil selon la revendication 5, sensible à une succession d'une ou plusieurs prononciations d'une personne, et dans lequel ledit moyen de mesure (18) est actionnable pour mesurer le niveau de bruit ambiant ($N_n$) régnant à chacune desdites prononciations pour fournir une série de valeurs de bruit, et ledit appareil comprend un moyen (18) pour mesurer le niveau vocal ($S_n$) d'une prononciation, et ledit moyen de traitement (22) utilise au moins deux desdites valeurs de bruit ($N_n$), conjointement avec une valeur représentative du niveau vocal ($S_n$) de la prononciation immédiatement précédente, pour fournir un signal de sortie représentatif du niveau vocal probable ($S_n$\*) de la prononciation suivante.

7. Appareil selon la revendication 6, dans lequel ledit moyen de mesure (18) est adapté pour mesurer le niveau de bruit acoustique ambiant avant une prononciation ($N_n$), et le moyen de traitement fournit un signal de sortie représentatif d'une estimation du niveau vocal $S_1$\* d'une prononciation (1) sur la base de l'expression suivante :

$$S_1{}^* = S_0 + f(N_1 - N_0)$$

où :

   - $S_0$ est le niveau vocal de la prononciation immédiatement précédente ;
   - $N_1$, $N_0$ sont les niveaux de bruit régnant respectivement immédiatement avant la prononciation dont le niveau vocal doit être estimé, et immédiatement après la prononciation préalable suivante, ; et
   - f(x) est une fonction rapportant des changements dans le niveau vocal dans lequel la personne qui parle est située au niveau vocal de la personne qui parle.

8. Appareil selon la revendication 7, dans lequel ledit moyen de traitement (22) fournit un signal de sortie représentatif d'une estimation du niveau vocal $S_1^*$ sur la base de l'expression suivante :

$$S_1^* = S_0 + k \, (N_1 - N_0)$$

où K est une constante, k<1.

9. Appareil selon la revendication 8, dans lequel k se situe dans la plage de 0 à 0,6.

10. Système de reconnaissance vocale pour recevoir des paroles prononcées en utilisation dans un environnement contenant du bruit acoustique ambiant, ledit système comprenant :

   - un moyen (20) de reconnaissance vocale pour recevoir et traiter des données représentatives desdites paroles prononcées devant être reconnues en des données de sortie représentatives de ou dépendantes du contenu lexical desdites paroles prononcées, ledit système comprenant un moyen (16) d'ajustement de niveau pour ajuster le ou les niveaux des paroles prononcées, ledit système comprenant en outre un moyen (18) pour mesurer ledit niveau de bruit acoustique (N) ;
   - un moyen (18) pour mesurer le ou les niveaux vocaux d'une prononciation précédente ; et
   - un moyen de traitement (22) pour utiliser ledit niveau de bruit acoustique mesuré et le niveau vocal de ladite prononciation précédente pour fournir un signal de sortie représentatif et estimatif du ou des niveaux vocaux probables (S*) dans ladite prononciation ; et
   - un moyen pour commander ledit moyen (16) d'ajustement de niveau conformément audit signal de sortie représentatif du niveau vocal probable ($S_n^*$) des paroles prononcées.

11. Procédé pour prédire le niveau vocal (S) des paroles prononcées par une personne exposée à un environnement contenant un niveau variable de bruit acoustique ambiant (N), ledit procédé comprenant les étapes consistant à :

   - mesurer ledit niveau de bruit acoustique ambiant (N) ; et
   - traiter ledit niveau de bruit acoustique mesuré (N) avec une mesure du niveau vocal (S) d'une prononciation préalable pour prédire le niveau vocal probable (S*) de ladite prononciation.

12. Procédé selon la revendication 11, dans lequel ledit niveau de bruit acoustique ambiant ($N_n$) est mesuré avant ladite prononciation.

13. Procédé selon la revendication 11, dans lequel plusieurs mesures dudit niveau de bruit acoustique (N) sont prises et utilisées avec une ou plusieurs mesures du ou des niveaux vocaux (S) correspondant auxdites mesures de niveau de bruit acoustique pour prédire le niveau vocal probable (S) de la prononciation.

14. Procédé pour commander le gain dans un système de reconnaissance ou traitement de la voix dans un environnement contenant un niveau variable de bruit acoustique ambiant, lequel procédé comprend le contrôle du gain du signal vocal conformément à une estimation du niveau vocal (S*), ladite estimation étant obtenue par la mesure dudit niveau de bruit acoustique ambiant (N) et le traitement dudit niveau de bruit acoustique mesuré (N) avec une mesure du niveau vocal (S) d'une prononciation préalable pour produire une estimation du niveau vocal probable de ladite prononciation.

EP 1 121 685 B1